# EUROPÄISCHE PATENTSCHRIFT

(11) **EP 1 398 248 B1**
(45) Veröffentlichungstag und Bekanntmachung des Hinweises auf die Patenterteilung: **14.06.2006**
(21) Anmeldenummer: 03020137.0
(22) Anmeldetag: 05.09.2003
(51) Int. Cl.: B62D 25/06, B62D 27/02

(54) **Kraftfahrzeugkarosserie mit wenigstens einem Querträger, insbesondere Dachquerträger**
Motor vehicle body with at least a crossmember, especially a roof crossmember
Carrosserie de véhicule automobile avec au moins une traverse, notamment une traverse de toit

(30) Priorität: 11.09.2002 DE 10242063
(43) Veröffentlichungstag der Anmeldung: 17.03.2004
(73) Patentinhaber: Bayerische Motoren Werke Aktiengesellschaft, 80809 München (DE)
(72) Erfinder: Hoppe, Gerhard, 81541 München (DE); Rill, Roland, 80807 München (DE); Essebier, Stefan, Dr., 86517 Augsburg (DE); Selesi, Roland, 82140 Olching (DE)

(56) Entgegenhaltungen:
- EP-A- 0 753 450
- DE-A- 2 550 687
- DE-A- 10 162 825
- US-A- 3 794 376

## Beschreibung

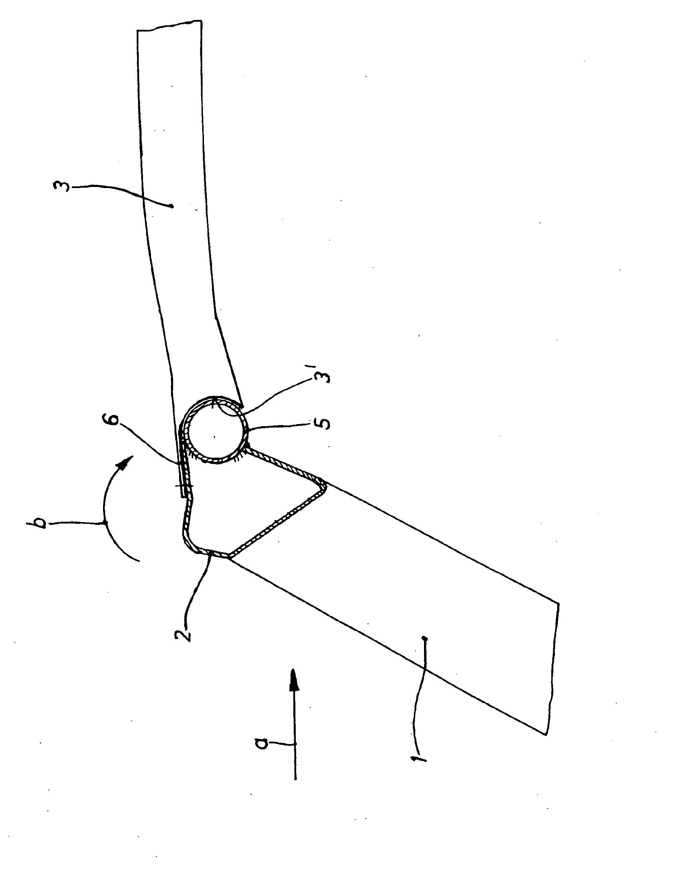

Die Erfindung bezieht sich auf eine Kraftfahrzeugkarosserie mit wenigstens einem Querträger der im Oberbegriff des Patentanspruchs 1 genannten und beispielsweise aus der DE 196 38 156 A1 (Fig. 1) hervorgehenden Art.

Aus dieser Druckschrift ist es bekannt, an den Endabschnitten des Dachquerträgers jeweils einen Verbindungsflansch auszubilden und diesen in üblicherweise mit einem von einem Seitenwandelement zum Fahrzeuginnenraum hin abstehenden Verbindungsflansch zu verschweißen. Zur Erhöhung der Knicksteifigkeit zwischen dem Seitenwandelement und dem Dachquerträger ist es zwar bekannt, diesen an der Verbindungsstelle der beiden Teile mit einem Verstärkungsblech zu versehen. Dies ist jedoch arbeitsaufwändig und teuer. Schließlich wird auch das Fahrzeuggewicht geringfügig erhöht.

Aufgabe der Erfindung ist es daher, bei einer Kraftfahrzeugkarosserie der im Oberbegriff des Patentanspruchs 1 genannten Art den Querträger derart mit einem Längsholm zu verbinden, dass bei einem gegen diesen wirkenden Seitencrash der Querträger bis zu einer bestimmten Größe der Krafteinwirkung nicht verformt wird.

Zur Lösung der Aufgabe sind die im Patentanspruch 1 dargelegten Merkmale vorgesehen.

Da der Querträger an einem, üblicherweise jedoch an beiden Endabschnitten über jeweils ein Gelenk - das beispielsweise auch aus einer Schraubverbindung oder dergleichen bestehen kann - mit dem zugewandten Längsholm in Verbindung steht, kann das Seitenwandelement im Bereich des Querträgers bei einem Seitencrash in einer Richtung ausweichen, also sich in einer nach oben oder unten gerichteten Richtung verlagern, so dass bis zu einer bestimmten Krafteinwirkungsgröße der Querträger nicht oder allenfalls geringfügig verformt wird. Dabei ist das Gelenk kostengünstig herzustellen und auch der Querträger über das Gelenk unkompliziert zu montieren.

Zweckmäßigerweise besteht das Gelenk aus einem konkaven und einem konvexen Gelenkteil, wobei die Stirnseite eines Dachquerträgers halbkreisförmig konkav ausgebildet ist, während sich das konvexe Gelenkteil am Längsholm der Fahrzeugkarosserie befindet. Dabei ist in einfacher Weise am Längsholm ein Rohr mit kreisförmigem Querschnitt angebracht, in das die konkave Stirnseite des Dachquerträgers eingreift. Falls in einem Kraftfahrzeug ein Gaszuleitungsrohr zu einem Seitenairbag vorhanden ist, kann dieses vorteilhafterweise als konvexes Gelenkteil genutzt werden (Merkmale der Patentansprüche 2 bis 6).

Schließlich weist der Dachquerträger an seiner Oberseite zweckmäßigerweise drei, im Abstand nebeneinander liegende Befestigungslaschen auf, über die er mit dem Längsholm durch Schweißen oder Kleben verbunden ist (Merkmale des Patentanspruchs 7).

Ein Ausführungsbeispiel der Erfindung ist in der Zeichnung dargestellt und wird im Folgenden erläutert. Diese zeigt den oberen Bereich eines Seitenwandelements eines Personenkraftwagens mit Längsholm und Dachquerträger sowie ein zwischen den beiden Teilen vorgesehenes Gelenk.

Der in der Zeichnung teilweise dargestellte Dachbereich einer Personenkraftwagenkarosserie weist ein teilweise veranschaulichtes Seitenwandelement 1 mit einem oben liegenden, etwa waagrecht verlaufenden Längsholm 2 und einem mit diesem verbundenen Dachquerträger 3 auf.

Wie in der Zeichnung ersichtlich, ist am Längsholm 2 ein längs diesem verlaufendes Gaszuleitungsrohr 5 für einen nicht dargestellten Seitenairbag angebracht. Das Gaszuleitungsrohr 5 hat einen kreisförmigen Querschnitt, wobei der freie, etwa halbkreisförmige sowie der Fahrzeuglängsmittelebene zugewandte Umfangsabschnitt des Gaszuleitungsrohrs 5 von der halbkreisförmig konkav ausgebildeten Stirnseite 3' des Dachquerträgers 3 umgeben ist. Durch den konvexen Umfangsabschnitt des Gaszuleitungsrohrs 5 und der mit diesem zusammenwirkenden, konkaven Stirnseite 3' des Dachquerträgers 3 ist zwischen den beiden Teilen eine gelenkartige Verbindung geschaffen, durch die gewährleistet ist, dass bei einer etwa in Pfeilrichtung a gegen das Seitenwandelement 1 und den Längsholm 2 gerichtete Krafteinwirkung, die durch einen Fahrzeugcrash verursacht ist, das Seitenwandelement 1 samt Längsholm 2 etwa im Sinne des Bogenpfeils b (also etwa bogenförmig) um die konkave Stirnseite 3' des Dachquerträgers 3 nach oben verlagert wird. Somit wird der Dachquerträger 3 bis zu einer bestimmten Kraftwirkungsgröße in Pfeilrichtung a kaum beschädigt.

Schließlich sind am Dachquerträger 3 an seiner Oberseite einstückig zwei seitliche und eine mittige Befestigungslasche 6 ausgebildet, über die der Dachquerträger 3 durch Punktschweißen oder Kleben mit dem Längsholm 2 verbunden ist. Anstelle der einstückig am Dachquerträger 3 ausgebildeten Befestigungslaschen 6 können auch separate Befestigungslaschen vorgesehen werden, die jeweils mit dem Dachquerträger 3 und dem Längsholm 2 verschweißt oder verklebt sind.

## Patentansprüche

1. Kraftfahrzeug-Karosserie mit wenigstens einem Querträger (3), insbesondere Dachquerträger, der sich zwischen zwei gegenüberliegenden Längsholme (2) erstreckt und mit diesen in Verbindung steht,
**dadurch gekennzeichnet, dass** der Querträger 3) an mindestens einem Endabschnitt über ein Gelenk (5) mit dem zugewandten Längsholm (2) in Verbindung steht.

2. Kraftfahrzeug-Karosserie nach Anspruch 1,
**dadurch gekennzeichnet, dass** das Gelenk aus einem konkaven und einem konvexen Gelenkteil besteht.

3. Kraftfahrzeug-Karosserie nach Anspruch 1 oder 2,
**dadurch gekennzeichnet, dass** sich das konkave Gelenkteil an einem Dachquerträger (3) befindet, während das konvexe Gelenkteil am Längsholm (2) vorgesehen ist.

4. Kraftfahrzeug-Karosserie nach einem der Ansprüche 1 bis 3,
**dadurch gekennzeichnet, dass** die Stirnseite (3') des Dachquerträgers (3) halbkreisförmig konkav ausgebildet ist.

5. Kraftfahrzeug-Karosserie nach einem der Ansprüche 1 bis 4,
**dadurch gekennzeichnet, dass** an mindestens einem Längsholm (2) zumindest im Bereich des Dachquerträgers (3) ein Rohr mit kreisförmigem Querschnitt angebracht ist, in das die halbkreisförmig konkav ausgebildete Stirnseite (3') des Dachquerträgers (3) eingreift.

6. Kraftfahrzeug-Karosserie nach Anspruch 5,
**dadurch gekennzeichnet, dass** als Rohr am Längsholm (2) für das gelenkige Zusammenwirken mit dem Dachquerträger (3) das Gaszuleitungsrohr (5) eines Airbags dient.

7. Kraftfahrzeug-Karosserie nach Anspruch 1,
**dadurch gekennzeichnet, dass** der Dachquerträger (3) zumindest an seiner Oberseite über mindestens eine von ihm abstehende Befestigungslasche (6) mit dem Längsholm (2) unlösbar verbunden ist.

## Claims

1. A motor vehicle body with at least one cross-member (3), especially a roof cross-member, extending between and connecting two opposite longitudinal members (2),
**characterised in that** at least one end portion of the cross-member (3) is connected to the facing longitudinal member (2) by a joint (5).

2. A body according to claim 1,
**characterised in that** the joint comprises a concave part and a convex part.

3. A body according to claim 1 or claim 2,
**characterised in that** the concave part is on a roof cross-member (3) whereas the convex part is provided on the longitudinal member (2).

4. A body according to any of claims 1 to 3,
**characterised in that** the end face (3') of the roof cross-member (3) is semicircularly concave.

5. A body according to any of claims 1 to 4,
**characterised in that** a tube having a circular cross-section in which the semicircularly concave end face (3') of the roof cross-member (3) engages is attached to at least one longitudinal member (2), at least in the region of the roof cross-member (3).

6. A body according to claim 5,
**characterised in that** the tube on the longitudinal member (2) for pivotable co-operation with the roof cross-member (3) is the pipe (5) supplying gas to an airbag.

7. A body according to claim 1,
**characterised in that** the roof cross-member (3), at least at its top, is non-releasably connected to the longitudinal member (2) by at least one fastening lug (6) projecting from the roof cross-member.

## Revendications

1. Carrosserie de véhicule automobile comprenant au moins une traverse (3), en particulier une traverse de toit, qui s'étend entre deux longerons opposés (2) et est reliée à ceux-ci,
**caractérisée en ce que**
la traverse (3) est reliée au niveau d'au moins une section d'extrémité, par une articulation (5), avec le longeron tourné vers elle (2).

2. Carrosserie de véhicule automobile selon la revendication 1,
**caractérisée en ce que**
l'articulation se compose d'une pièce d'articulation concave et d'une pièce d'articulation convexe.

3. Carrosserie de véhicule automobile selon la revendication 1 ou 2,
**caractérisée en ce que**
la pièce d'articulation concave se trouve au niveau d'une traverse de toit (3), tandis que la pièce d'articulation convexe est prévue au niveau du longeron (2).

4. Carrosserie de véhicule automobile selon l'une quelconque des revendications 1 à 3,
**caractérisée en ce que**
la face frontale (3') de la traverse de toit (3) est concave en forme de demi-cercle.

5. Carrosserie de véhicule automobile selon l'une quelconque des revendications 1 à 4,
**caractérisée en ce qu'**
au moins un longeron (2), comporte au moins dans la zone de la traverse de toit (3), un tube ayant une section transversale circulaire, dans lequel s'engage la face frontale (3') concave en forme de demi-cercle de la traverse de toit (3).

6. Carrosserie de véhicule automobile selon la revendication 5,
**caractérisée en ce que**
le tube d'arrivée de gaz (5) d'un airbag sert de tube au niveau du longeron (2) pour la coopération articulée avec la traverse de toit (3).

7. Carrosserie de véhicule automobile selon la revendication 1,
**caractérisée en ce que**
la traverse de toit est reliée de façon inamovible, par au moins une patte de fixation (6) partant de celle-ci, au niveau de son côté supérieur, avec le longeron (2).
